(19) Europäisches Patentamt

European Patent Office

Office européen des brevets

(11) **EP 1 556 259 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(21) Anmeldenummer: **03757658.4**

(22) Anmeldetag: **08.09.2003**

(51) Int Cl.:
*B60R 25/00* (2006.01)     *G07C 9/00* (2006.01)
*G01S 13/74* (2006.01)

(86) Internationale Anmeldenummer:
**PCT/DE2003/002967**

(87) Internationale Veröffentlichungsnummer:
**WO 2004/035357 (29.04.2004 Gazette 2004/18)**

(54) **VERFAHREN ZUR ERMITTLUNG DES ABSTANDS ZWISCHEN EINER ERSTEN UND ZWEITEN SENDE-EMPFANGS-STATION**

METHOD FOR DETERMINING THE DISTANCE BETWEEN A FIRST AND SECOND TRANSMITTING AND RECEIVING STATION

PROCEDE DE DETERMINATION DE LA DISTANCE ENTRE DEUX STATIONS EMETTRICES-RECEPTRICES ET STATIONS EMETTRICES-RECEPTRICES CORRESPONDANTES

(84) Benannte Vertragsstaaten:
**DE FR**

(30) Priorität: **12.10.2002 DE 10247718**

(43) Veröffentlichungstag der Anmeldung:
**27.07.2005 Patentblatt 2005/30**

(73) Patentinhaber: **Conti Temic microelectronic GmbH**
**90411 Nürnberg (DE)**

(72) Erfinder:
• **HAAS, Heinrich**
**88074 Meckenbeuren (DE)**
• **ÖXLE, Thomas**
**88677 Markdorf (DE)**
• **SCHULER, Rolf**
**88682 Salem (DE)**
• **SCHULTER, Wolfgang**
**88709 Meersburg (DE)**
• **KNEPPER, Udo**
**88085 Langenargen (DE)**

(56) Entgegenhaltungen:
**WO-A-00/12848          DE-A- 10 019 277**

**Beschreibung**

Die Erfindung betrifft ein Verfahren zur Ermittlung des Abstands zwischen einer ersten und zweiten Sende-Empfangs-Station gemäß dem Oberbegriff des Patentanspruchs 1.

Ein derartiges Verfahren ist aus der DE 100 19 277 A1 bekannt. Bei diesem Verfahren wird zwischen einem von einem Benutzer bei sich zu tragenden elektronischen Schüsselmodul und einer in einem Kraftfahrzeug vorgesehenen Auswerteeinheit eine Funkverbindung zur Übertragung von Daten aufgebaut, um das Schlüsselmodul anhand einer im Schlüsselmodül gespeicherten Identifikationsnummer zu identifizieren, und das Kraftfahrzeug ggf. zür Benutzung freizugeben. Der Aufbau der Funkverbindung erfolgt dabei über eine im Schlüsselmodul und eine in der Auswerteeinheit vorgesehene Sende-Empfangs-Station. Um zu verhindern, daß die Funkverbindung über Relaisstationen verlängert wird und das Kraftfahrzeug unbemerkt vom berechtigten Benutzer zur Benutzung freigegeben wird, wird der Abstand zwischen dem Schlüsselmodul und der Auswerteeinheit ermittelt und die Freigabe des Kraftfahrzeugs verhindert, wenn das Schlüsselmodul sich nicht im Nahbereich der Auswerteeinheit befindet. Die Abstandsermittlung basiert dabei auf einer Signallaufzeitauswertung der über die Funkverbindung übertragenen Signale.

Der Erfindung liegt die Aufgabe zugrunde, ein Verfahren zur Ermittlung des Abstands zwischen zwei Sende-Empfangs-Stationen anzugeben, das mit geringem Aufwand durchführbar ist und die Messung kurzer Abstände mit hoher Auflösung ermöglicht.

Die Aufgabe wird durch die Merkmale des Patentanspruchs 1 gelöst. Vorteilhafte Ausgestaltungen und Weiterbildungen ergeben sich aus den Unteransprüchen.

Erfindungsgemäß wird der Abstand zwischen einer ersten und zweiten Sende-Empfangs-Station durch Messung der Signallaufzeit eines in der ersten Sende-Empfangs-Station erzeugten und zur zweiten Sende-Empfangs-Station übertragenen ersten Sendesignals und eines in der zweiten Sende-Empfangs-Station erzeugten und zur ersten Sende-Empfangs-Station übertragenen zweiten Sendesignals ermittelt. Die erste Sende-Empfangs-Station empfängt das von der zweiten Sende-Empfangs-Station ausgesendete zweite Sendesignal als erstes Empfangssignal und die zweite Sende-Empfangs-Station empfängt das von der ersten Sende-Empfangs-Station ausgesendete erste Sendesignal als zweites Empfangssignal. Die Sendesignale werden jeweils als Mikrowellenimpulsreihe mit vorgegebener Impulswiederholfrequenz erzeugt, wobei die Impulswiederholfrequenzen sich voneinander um einen vorgegebenen, vorzugsweise gegenüber den Impulswiederholfrequenzen geringen Differenzfrequenzwert unterscheiden. Des weiteren werden in der ersten Sende-Empfangs-Station erste Koinzidenzzeitpunkte und in der zweiten Sende-Empfangs-Station zweite Koinzidenzzeitpunkte ermittelt, wobei die ersten Koinzidenzzeitpunkte den Zeitpunkten entsprechen, zu denen Impulse des ersten Sendesignals mit Impulsen des von der ersten Sende-Empfangs-Station empfangenen ersten Empfangssignals zusammentreffen, und die zweiten Koinzidenzzeitpunkte den Zeitpunkten entsprechen, zu denen Impulse des zweiten Sendesignals mit Impulsen des von der zweiten Sende-Empfangs-Station empfangenen zweiten Empfangssignals zusammentreffen. Die Signallaufzeit der Sendesignale und damit auch der Abstand zwischen den Sende-Empfangs-Stationen wird dann aus den Abständen zwischen den Koinzidenzzeitpunkten ermittelt.

In einer bevorzugten Ausgestaltung des Verfahrens wird ein Koinzidenzabstand, der den zeitlichen Versatz zwischen den ersten und zweiten Koinzidenzzeitpunkten darstellt, als Maß der Signallaufzeit der Sendesignale und somit als Maß des Abstands zwischen den beiden Sende-Empfangs-Stationen ermittelt.

Vorzugsweise werden hierzu Informationen über die zweiten Koinzidenzzeitpunkte über einen Funkkanal von der zweiten Sende-Empfangs-Station zur ersten Sende-Empfangs-Station übertragen. Der Koinzidenzabstand wird dann in der ersten Sende-Empfangs-Station aus den übermittelten Informationen und den in der ersten Sende-Empfangs-Station ermittelten ersten Koinzidenzzeitpunkten ermittelt. Die Übertragung der Informationen über die zweiten Koinzidenzzeitpunkte und die Übertragung der Sendesignale erfolgt dabei vorzugsweise über unterschiedliche Funkkanäle.

In einer weiteren bevorzugten Ausgestaltung des Verfahrens wird das zweite Sendesignal durch Frequenzumtastung seiner Impulswiederholfrequenz moduliert und eine aus der Frequenzumtastung resultierende Änderung des Abstands zwischen den ersten Koinzidenzzeitpunkten als Maß des Abstands zwischen den Sende-Empfangs-Stationen ermittelt. Dabei wird die Impulswiederholfrequenz des zweiten Sendesignals vorzugsweise zeitsynchron zu den zweiten Koinzidenzzeitpunkten zwischen zwei festen Frequenzwerten gewechselt.

Die beiden festen Frequenzwerte werden vorteilhafterweise derart vorgegeben, daß der Wechsel vom einen Frequenzwert zum anderen Frequenzwert eine Verdoppelung des Betrags der Differenz zwischen den Impulswiederholfrequenzen der Sendesignale oder eine Vorzeichenumkehr dieser Differenz bewirkt.

In einer vorteilhaften Weiterbildung des Verfahrens werden durch die Modulation des zweiten Sendesignals Daten von der zweiten Sende-Empfangs-Station zur ersten Sende-Empfangs-Station übertragen. Vorteilhafterweise wird auch das erste Sendesignal durch Frequenzumtastung moduliert, um von Daten von der ersten Sende-Empfangs-Station zur zweiten Sende-Empfangs-Station zu übertragen.

Vorzugsweise wird zur Ermittlung der Koinzidenzzeitpunkte in jeder Sende-Empfangs-Station das in der jeweiligen Sende-Empfangs-Station erzeugte Sendesignal mit dem von dieser Station empfangenden Empfangssignal durch Mischung in ein Zwischenfrequenzsignal und durch anschließende Filterung und Hüllkurvendemodulation in ein

impulsförmiges Auswertesignal umgesetzt. Die Pulse der Auswertesignafe treten dabei zu den gesuchten Koinzidenzzeitpunkten auf.

Das erfindungsgemäße Verfahren eignet sich bestens für den Einsatz in einem schlüssellosen Schließsystem für Kraftfahrzeuge. Bei einem derartigen Schließsystem ist im Kraftfahrzeug eine Basisstation als Auswerteeinheit vorgesehen, die über eine Funkstrecke mit tragbaren Schlüsselmodulen kommuniziert. Die Funkverbindung wird dabei über Sende-Empfangs-Stationen aufgebaut, die in der Basisstation bzw. in den Schlüsselmodulen vorgesehen sind. Der Verbindungsaufbau kann unbemerkt vom Benutzer, beispielsweise durch Betätigung eines Türgriffs erfolgen. Über die Funkverbindung werden Daten ausgetauscht, insbesondere werden in den Schlüsselmodulen gespeicherte Identifikationsnummern - vorteilhafterweise in verschlüsselter Form - zur Basisstation übertragen. Die Basisstation ermöglicht den Zugang zum Kraftfahrzeug, wenn sie anhand der Identifikationsnummer eines Schlüsselmoduls erkennt, daß diesem Schlüsselmodul eine Zugangsberechtigung zugeordnet ist, und wenn das Schlüsselmodul sich innerhalb eines bestimmten Abstands zur Basisstation befindet. Der Abstand wird dabei nach dem erfindungsgemäßen Verfahren ermittelt. Aufgrund der hohen Auflösung ist es zudem möglich, festzustellen, ob das Schlüsselmodul sich innerhalb oder außerhalb des Kraftfahrzeugs befindet. Damit ist es möglich, das Verriegeln des Kraftfahrzeugs zu verhindern, wenn das Schlüsselmodul sich im Inneren des Kraftfahrzeugs befindet.

Durch die Berücksichtigung des Abstands zwischen der Basisstation und dem Schlüsselmodul wird die Sicherheit des Schließsystems erhöht, weil der Zugang zum Kraftfahrzeug auch bei korrekter Identifikationsnummer verhindert wird, wenn der Abstand zwischen dem Schlüsselmodul und der Basisstation einen bestimmten Wert überschreitet. Unbefugten ist es damit nicht möglich, sich unbemerkt vom berechtigten Benutzer Zugang zum Kraftfahrzeug zu beschaffen, indem sie über Relaisstationen eine Funkverbindung zwischen dem Schlüsselmodul und der Basisstation aufbauen.

Die Erfindung wird nachfolgend anhand von Ausführungsbeispielen und Figuren näher erläutert. Es zeigen:

Figur 1    ein Blockschaltbild mit zwei Sende-Empfangs-Stationen zur Durchführung des erfindungsgemäßen Verfahrens,

Figur 2-7    Zeitdiagramme von in den Sende-Empfangs-Stationen erzeugten und verarbeiteten Signalen.

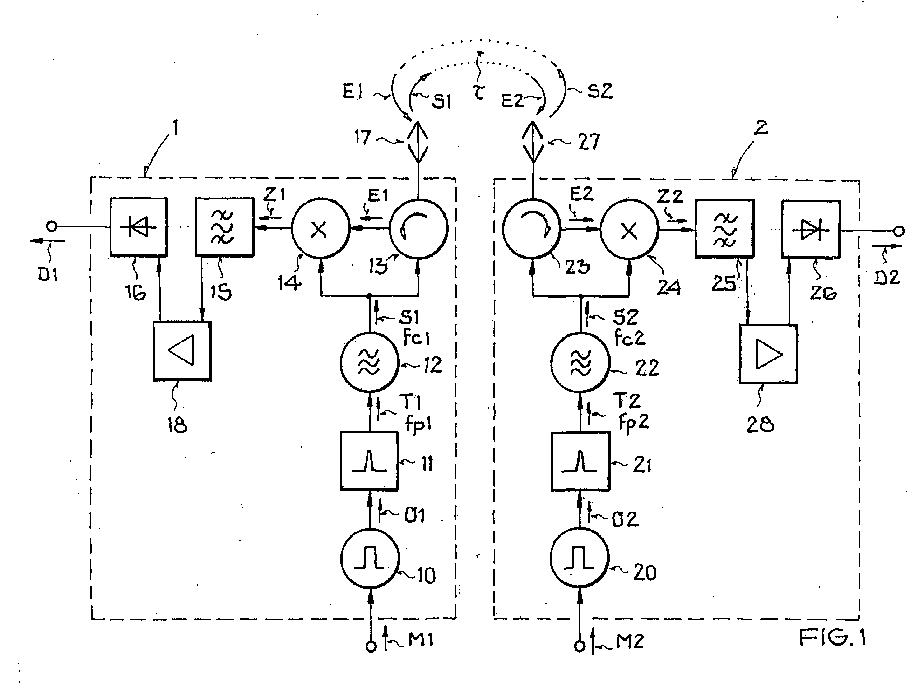

Gemäß Figur 1 sind die erste Sende-Empfangs-Station 1 und die zweite Sende-Empfangs-Station 2 gleich ausgeführt. Die erste Sende-Empfangs-Station 1 umfaßt einen hochstabilen frequenzmodulierbaren Oszillator 10, einen Pulsformer 11, einen Mikrowellenoszillator 12, einen Koppler 13, einen Mischer 14, ein ZF-Filter 15, einen ZF-Verstärker 18, einen Hüllkurvendmodulator 16 und eine Sende-Empfangs-Antenne 17. Entsprechend umfaßt auch die zweite Sende-Empfangs-Station 2 einen hochstabilen modulierbaren Oszillator 20, einen Pulsformer 21, einen Mikrowellenoszillator 22, einen Koppler 23, einen Mischer 24, ein ZF-Filter 25, einen ZF-Verstärker 28, einen Hüllkurvendmodulator 26 und eine Sende-Empfangs-Antenne 27.

Die Sende-Empfangs-Stationen 1 und 2 werden durch einen Weckvorgang aktiviert und arbeiten gleichzeitig.

Dabei erzeugt der modulierbare Oszillator 10 in der ersten Sende-Empfangs-Station 1 ein nach Maßgabe eines Steuersignals M1 in der Frequenz modulierbares Oszillatorsignal O1, das dem Pulsformer 11 zugeführt wird, der daraus ein Triggersignal T1 mit schmalen Impulsen erzeugt, deren Pulsabstand oder Impulswiederholfrequenz fp1 durch die Schwingungsfrequenz des Oszillatorsignals O1 bestimmt wird. Das Triggersignal T1 wird dem Mikrowellenoszillator 12 zugeführt, der in Antwort auf die Impulse des Triggersignals T1 jeweils einen Mikrowellenimpuls mit einigen Perioden der Trägerfrequenz fc1 des Oszillators 12 erzeugt. Der Mikrowellensoszillator 12 gibt somit eine Mikrowellenimpulsreihe als erstes Sendesignal S1 ab, das über den Koppler 13 der Sende-Empfangs-Antenne 17 sowie dem Mischer 14 zugeführt wird.

Analog dazu erzeugt der modulierbare Oszillator 20 in der zweiten Sende-Empfangs-Station 2 ebenfalls- ein nach Maßgabe eines Steuersignals M2 in der Frequenz modulierbares Oszillatorsignal O2, das dem Pulsformer 21 zugeführt wird, der daraus ebenfalls ein Triggersignal T2 mit schmalen Impulsen erzeugt, deren Impulswiederholfrequenz fp2 durch die Schwingungsfrequenz des Oszillatorsignals O2 bestimmt wird. Das Triggersignal T2 wird dem Mikrowellenoszillator 22 zugeführt, der in Antwort auf die Impulse des Triggersignals T2 jeweils einen Mikrowellenimpuls mit einigen Perioden der Trägerfrequenz fc2 des Oszillators 22 erzeugt. Der Mikrowellensoszillator 22 gibt somit eine Mikrowellenimpulsreihe als zweites Sendesignal S2 ab, das über den Koppler 23 der Sende-Empfangs-Antenne 27 sowie dem Mischer 24 zugeführt wird.

Über die Sende-Empfangs-Antennen 17 und 27 werden dann das erste bzw. zweite Sendesignal S1 bzw. S2 zur zweiten bzw. ersten Sende-Empfangs-Station 2 bzw. 1 ausgesendet und nach einer zeitlichen Verzögerung um eine Signallaufzeit τ dort über deren Sende-Empfangs-Antenne 27 bzw. 17 als zweites bzw. erstes Empfangssignal E2 bzw. E1 empfangen.

In der ersten Sende-Empfangs-Station 1 wird das erste Empfangssignal E1 dann im Mischer 14 mit dem ersten Sendesignal S1 zu einem Zwischenfrequenzsignal Z1 zusammengeführt, aus dem durch Filterung im ZF-Filter 15, Verstärkung im ZF-Verstärker 18 und anschließende Demodulation im Hüllkurvendemodulator 16 ein erstes Auswertesignal D1 erzeugt wird. Entsprechend wird in der zweiten Sende-Empfangs-Station 2 das zweite Empfangssignal E2 im Mischer 24 mit dem zweiten Sendesignal S2 zu einem Zwischenfrequenzsignal Z2 zusammengeführt, aus dem durch Filterung im ZF-Filter 25, Verstärkung im ZF-Verstärker 28 und anschließende Demodulation im Hüllkurvendemodulator 26 ein zweites Auswertesignal D2 erzeugt wird.

Die Signallaufzeit $\tau$ ist die Zeit, die die Sendesignale S1, S2 benötigen, um von der einen Sende-Empfangs-Station zur anderen zu gelangen. Sie ist aufgrund der festen Ausbreitungsgeschwindigkeit von elektromagnetischen Wellen ein Maß für den gesuchten Abstand zwischen den beiden Sende-Empfangs-Stationen 1, 2.

Die Trägerfrequenzen fc1, fc2 der Sendesignale S1, S2 sind gleich und liegen beispielsweise in dem Bereich von einigen GHz. An sie werden jedoch keine hohen Anforderungen bezüglich ihrer Genauigkeit und Frequenzstabilität gestellt.

Die Breite der Impulse der Triggersignale T1, T2 liegt in dem Bereich von ca. 1 ns und die Impulswiederholfrequenzen fp1, fp2 der Sendesignale S1, S2 liegen beispielsweise im Bereich von einigen MHz. Wesentlich ist, daß die Impulswiederholfrequenzen fp1, fp2 sich voneinander um einen Differenzfrequenzwert fd unterscheiden. Die Genauigkeit der Entfernungsmessung ist dabei von der Genauigkeit und Frequenzstabilität der Impulswiederholfrequenzen fp1, fp2 abhängig.

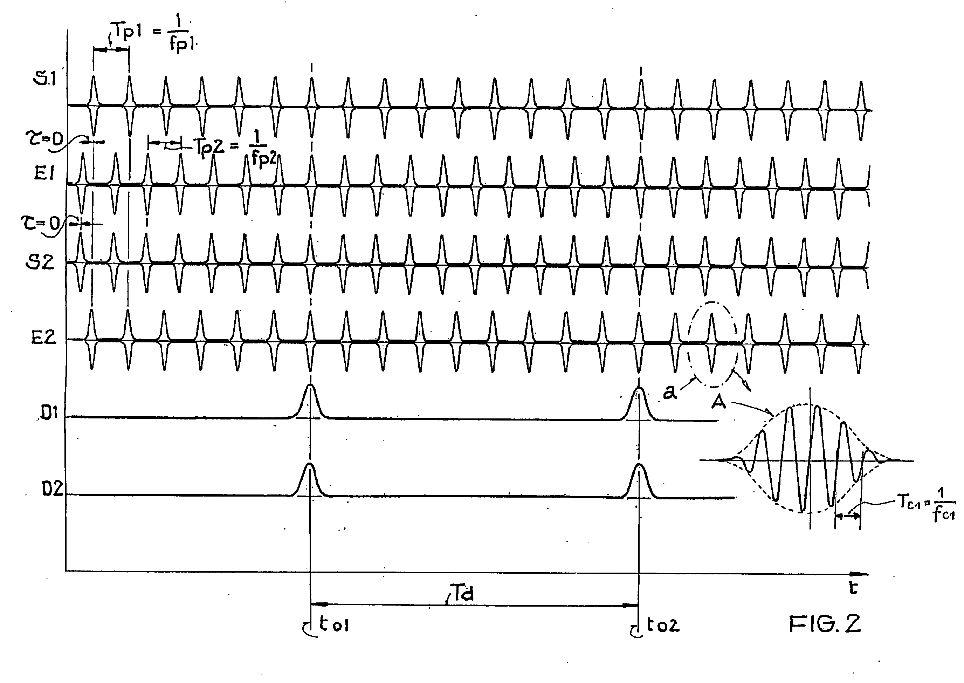

Figur 2 zeigt die Zeitdiagramme der von den Sende-Empfangs-Stationen 1, 2 ausgesendeten Sendesignale S1, S2, der von den Sende-Empfangs-Stationen 1, 2 empfangenen Empfangssignale E1, E2, der Zwischenfrequenzsignals Z1, Z2, und der Auswertesignale D1, D2 für den Fall, daß Sende-Empfangs-Stationen 1, 2 sich am gleichen Ort befinden. Für die Signallaufzeit $\tau$ gilt somit $\tau = 0$, d. h. die Sendesignale S1, S2 werden auf der Übertragungsstrecke nicht verzögert. Daher entspricht das erste Sendesignal S1 dem zweiten Empfangssignal E2 und das zweite Sendesignal S2 dem ersten Empfangssignal E1.

In der Figur sind - wie in der Vergrößerungsdarstellung A des Abschnitts a angedeutet - lediglich die Hüllkurven der Signale S1, S2, E1, E2 dargestellt. Diese stellen Impulse dar, die im Falle des ersten Sendesignals S1 und des zweiten Empfangssignals E2 um eine Pulsperiode Tp1 voneinander beabstandet sind und im Falle des zweiten Sendesignals S2 und des ersten Empfangssignals E1 um eine Pulsperiode Tp2 voneinander beabstandet sind. Die Pulsperioden Tp1, Tp2 entsprechen dabei dem Kehrwert der Impulswiederholfrequenz fp1 bzw. fp2 des jeweiligen Signals.

Die Mischung in den Mischern 14, 15 entspricht einer Abtastung des ersten und zweiten Empfangssignals E1, E2 mit dem ersten bzw. zweiten Sendesignal S1 bzw. S2. Der Differenzfrequenzwert fd ist so gering gewählt, daß es sich hierbei um eine Unterabtastung handelt.

Die resultierenden Auswertesignale D1, D2 sind ebenfalls impulsförmige Signale, deren Impulse periodisch im Pulsabstand Td auftreten. Für den Pulsabstand Td gilt dabei Td = 1/fd, wobei fd den Differenzfrequenzwert darstellt, um den sich die Impulswiederholfrequenzen fp1, fp2 voneinander unterscheiden. Die Impulse des ersten Auswertesignals D1 treten dabei zu Zeitpunkten auf, zu denen Impulse des ersten Sendesignals S1 und des ersten Empfangssignals E1 zusammentreffen. Diese Zeitpunkte werden im folgenden als erste Koinzidenzzeitpunkte bezeichnet. Entsprechend treten die Impulse des zweiten Auswertesignals D2 zu Zeitpunkten auf, zu denen Impulse des zweiten Sendesignals S2 und des zweiten Empfangssignals E2 zusammentreffen. Diese Zeitpunkte werden nachfolgend als zweite Koinzidenzzeitpunkte bezeichnet.

In der Figur sind noch Zeitpunkte t01, t02 dargestellt, zu denen die Impulse der beiden Sendesignale S1, S2 zeitlich zusammentreffen. Diese ebenfalls um den Pulsabstand Td voneinander beabstandete Zeitpunkte werden nachfolgend als Sende-Koinzidenzzeitpunkte bezeichnet.

Bei einer Signallaufzeit $\tau = 0$ fallen die ersten und zweiten Koinzidenzzeitpunkte mit den Sende-Koinzidenzzeitpunkten zusammen, da die Empfangssignale E1, E2 sich mit den jeweiligen Sendesignalen S1 bzw. S2 zeitlich decken.

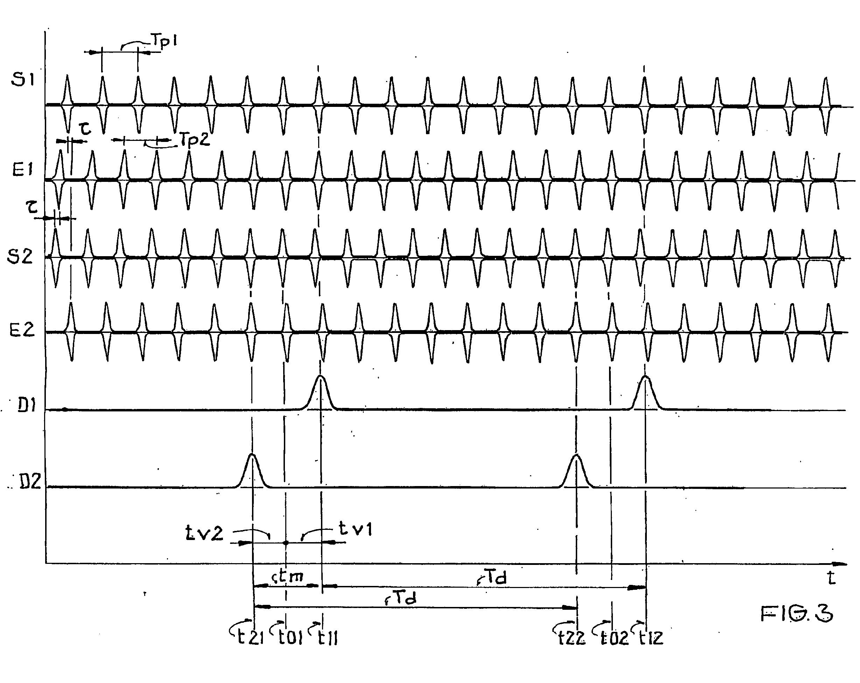

Figur 3 zeigt die Signale aus Figur 2 für den Fall, daß das erste Empfangssignal E1 gegenüber dem zweiten Sendesignal S2 und das zweite Empfangssignal E2 gegenüber dem ersten Sendesignal S1 auf dem Übertragungsweg um Signallaufzeit $\tau > 0$ zeitlich verzögert werden. Die Auswertesignale D1 und D2 verschieben sich dann gegenüber den Sende-Koinzidenzzeitpunkten t01, t02 in jeweils unterschiedliche Richtungen. Die Richtung der Verschiebung hängt dabei davon ab, ob das erste Sendesignal S1 gegenüber dem zweiten Sendesignal S2 die höhere oder niedrigerere Impulswiederholfrequenz aufweist. Im dargestellten Fall wird das erste Auswertesignal D1 gegenüber den Sende-Koinzidenzzeitpunkten t01, t02 um einen ersten Verschiebewert tv1 nach rechts verschoben während das zweite Auswertesignal D2 um einen zweiten Verschiebewert tv2 nach links verschoben wird. Man erhält dann die Zeitpunkte t11, t12 als erste Koinzidenzzeitpunkte und die Zeitpunkte t21, t22 als zweite Koinzidenzzeitpunkte.

Für die Verschiebewerte tv1, tv2 gilt dabei

$$tv1 = \tau \cdot na1$$

$$tv2 = \tau \bullet na2$$

mit

$$na1 = \frac{fp1}{fd} = \frac{fp1}{|fp1 - fp2|}$$

$$na2 = \frac{fp2}{fd} = \frac{fp2}{|fp1 - fp2|}$$

wobei $\tau$ für die Signallaufzeit steht, fp1 und fp2 für die Impulswiederholfrequenz des ersten bzw. zweiten Sendesignals S1 bzw. S2 stehen und fd für den Differenzfrequenzwert steht. Die Größen na1, na2 werden im folgenden als Dehnungsfaktoren bezeichnet.

Die Impulse der Auswertesignale D1, D2 werden somit um einen durch die Signallaufzeit $\tau$ bestimmten Koinzidenzabstand tm = tv1 + tv2 gegeneinander verschoben. Wird der Differenzfrequenzwert fd gegenüber den Impulswiederholfrequenzen fp1, fp2 gering gewählt, dann sind die Dehnungsfaktoren na1, na2 annähernd gleich groß. Für den Koinzidenzabstand tm gilt dann in guter Näherung

$$tm = 2 \tau \bullet na$$

mit

$$na = na1 \approx na2.$$

Aufgrund der Proportionalität zwischen dem Koinzidenzabstand tm und der Signattaufzeit $\tau$ läßt sich die Signallaufzeit $\tau$ und damit auch der Abstand zwischen den Sende-Empfangs-Stationen 1 und 2 nun durch Messung des Koinzidenzabstands tm ermitteln.

Wird der Dehnungsfaktor na groß gewählt, kann die Messung der Signallaufzeit $\tau$ der Sendesignale S1, S2 aus einem Originalzeitbereich auf eine gegenüber der Signallaufzeit $\tau$ um einige Größenordnungen größere Zeitbasis in einem Abbildungszeitbereich der Auswertesignale D1, D2 zurückgeführt werden. Beispielsweise läßt sich die Messung von Zeiten in der Größenordnung von einigen ns im Originalzeitbereich auf eine Messung von Zeiten in der Größenordnung von einigen $\mu$s oder sogar ms im Abbildungszeitbereich zurückführen, was mit einem geringen technischen Aufwand verbunden ist. Es ist damit mit geringem Aufwand möglich, Entfernungen mit einer Ortsauflösung von ca. 10 cm zu messen, was einer Zeitauflösung von etwa 300 ps im Originalzeitbereich entspricht.

Wenn die Abstandsmessung am Ort der ersten Sende-Empfangs-Station 1 erfolgen soll, dann müssen zur Ermittlung des Koinzidenzabstands tm an diesem Ort sowohl die ersten Koinzidenzzeitpunkte t11, t12 als auch die zweiten Koinzidenzzeitpunkte t21, t22 bekannt sein oder am Ort der ersten Sende-Empfangs-Station 1 Größen bereitgestellt werden, die in einer bestimmten Beziehung zu den Koinzidenzzeitpunkten t21, t22 stehen.

In einem ersten Ausführungsbeispiel werden Informationen über die zweiten Koinzidenzzeitpunkte t21, t22 über einen gesonderten Funkkanal von der zweiten Sende-Empfangs-Station 2 zur ersten Sende-Empfangs-Station 1 übertragen, d. h. über einen Funkkanal, dessen Trägerfrequenz sich von der Trägerfrequenz des ersten und zweiten Sendesignals S1, S2 unterscheidet. Die Trägerfrequenz des gesonderten Funkkanals ist dabei vorteilhafterweise geringer ist als die Trägerfrequenz der Sendesignale S1, S2. Aus den somit am Ort der ersten Sende-Empfangs-Station 1 bekannten ersten und zweiten Koinzidenzzeitpunkten kann dann der Koinzidenzabstand tm und hieraus die Signallaufzeit $\tau$ oder der Abstand zwischen den Sende-Empfangs-Stationen 1 und 2 ermittelt werden.

Die Signallaufzeit $\tau$ läßt sich aber auch ermitteln, indem das zweite Sendesignal S2 moduliert wird und die aus der Modulation resultierende Änderung des Abstands zwischen den ersten Koinzidenzzeitpunkten t11, t12, ... d. h. des Pulsabstands zwischen den Impulsen des ersten Auswertesignals D1, wie im folgenden dargelegt, ausgewertet wird, oder indem das erste Sendesignal S1 moduliert wird und die aus der Modulation resultierende Änderung des Abstands zwischen den zweiten Koinzidenzzeitpunkten t21, t22, ... d. h. des Pulsabstands zwischen den Impulsen des zweiten Auswertesignals D2 ausgewertet wird.

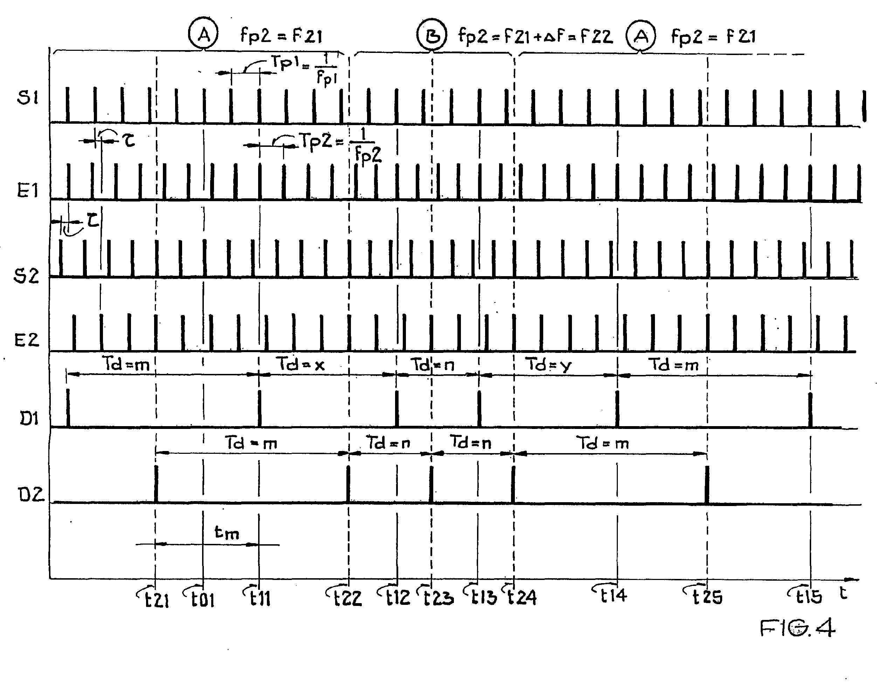

Figur 4 zeigt die Signale aus den Figuren 2 und 3 für den Fall, daß das zweite Sendesignal S2 durch Frequenzumtastung der Impulswiederholfrequenz fp2 moduliert wird. Die Impulse der Signale sind jetzt nur noch durch Striche dargestellt, welche-die Zeitpunkte des Auftretens der Impulse markieren.

Ausgehend von dem Fall, daß für den Differenzfrequenzwert fd gilt

$$fd = fp2 - fp1 \ mit \ fp2 > fp1,$$

wird bei der Frequenzumtastung die Impulswiederholfrequenz fp2 des zweiten Sendesignals S2 sprungartig von einem ersten festen Frequenzwert f21 um eine vorgegebene Frequenzstufe $\Delta f$ auf einen zweiten festen Frequenzwert f22 = f21 +$\Delta f$ erhöht, d. h. der Differenzfrequenzwert fd wird vergrößert, oder vom zweiten Frequenzwert f22 auf den ersten Frequenzwert f21 reduziert. Die Frequenzumtastung erfolgt dabei zeitsynchron zu den Impulsen des zweiten Auswertesignals D2.

Im dargestellten Beispiel wird die Impulswiederholfrequenz fp2 zu den Koinzidenzzeitpunkten t22, t24 umgeschaltet. In den Zeitabschnitten A ist die Impulswiederholfrequenz fp2 dann gleich dem ersten Frequenzwert f21 und im Zeitabschnitt B gleich dem zweiten Frequenzwert f22. Der Frequenzsprung um die Frequenzstufe $\Delta f$ hat zur Folge, daß der Pulsabstand Td zwischen den Impulsen des zweiten Auswertesignals D2 durch die Frequenzumtastung vom Wert m auf den Wert n reduziert bzw. wieder vom Wert n auf den Wert m erhöht wird. Wird die Frequenzstufe $\Delta f$ - wie in der Figur dargestellt - gleich dem Wert

$$\Delta f = f21 - fp1 \ = fd$$

gewählt, dann verdoppelt sich der Betrag des Differenzfrequenzwerts

$$fd = |fp1 - fp2|$$

beim Übergang vom Zeitbereich A in den Zeitbereich B und halbiert sich wieder beim Übergang vom Zeitbereich B in den nächsten Zeitbereich A. Der Wert m ist daher doppelt so groß wie der Wert n.

Die Frequenzumtastung hat weiterhin zur Folge, daß bei der Hochtastung der Impulswiederholfrequenz fp2 auf den zweiten festen Frequenzwert f22 der Pulsabstand Td zwischen den Impulsen des ersten Auswertesignals D1 vom Wert m um eine entfernungsproportionale Zeit td auf einen Wert x reduziert wird. Entsprechend wird bei der Rücktastung der Impulswiederholfrequenz fp2 auf den ersten festen Frequenzwert f21 und daß aufgrund der Erhöhung des Pulsabstands Td zwischen den Impulsen des zweiten Auswertesignals D2 der Pulsabstand Td zwischen den Impulsen des ersten Auswertesignals D1 vom Wert n um die entfernungsproportionale Zeit td auf einen Wert y erhöht wird.

Für die Werte x und y gilt

$$x = m - td$$

$$y = n + td,$$

mit

$$td = \tau \cdot na2 = \tau \cdot \frac{f21}{f21 - fp1} = \tau \cdot \frac{f21}{fd} .$$

Hierbei stehen m und n für den langen bzw. kurzen Pulsabstand Td zwischen den Impulsen des zweiten Auswertesignals D2, td für die entfernungsproportionale Zeit, $\tau$ für die Signallaufzeit und na2 für den Dehnungsfaktor bei der Impulswiederholfrequenz fp2 = f21. Die Werte x und y sind somit linear abhängig von der Signallaufzeit $\tau$.

Die obige Gleichung gilt für große Dehnungsfaktoren na2 und für eine Frequenzstufe von $\Delta f = f21 - fp1 = fd$. Wird die Frequenzstufe $\Delta f$ beliebig gewählt, gilt

$$td = 2 \cdot (\tau \cdot na2 - \tau \cdot na2^*) = 2 \cdot \tau \cdot (na2 - na2^*)$$

mit

$$na2 = \frac{f21}{f21 - fp1}$$

$$na2^* = \frac{f22}{f22 - fp1} = \frac{f21 + \Delta f}{f21 + \Delta f - fp1}.$$

Hierbei stehen na2 und na2* für die Dehnungsfaktoren bei der Impulswiederholfrequenz fp2 = f21 bzw. fp2 = f22 = f21 + $\Delta f$.

Durch Messung der Werte x und y ist es somit möglich, die entfernungsproportionale Zeit td und aus dieser die Signallaufzeit $\tau$ sowie den Abstand zwischen den Sende-Empfangs-Stationen 1 und 2 zu ermitteln.

Das beschriebene Verfahren ermöglicht neben der Ermittlung der Signallaufzeit $\tau$ gleichzeitig auch eine Übertragung von Daten von der zweiten Sende-Empfangs-Station 2 zur ersten Sende-Empfangs-Station 1. Dazu ist es lediglich erforderlich, den Werten m und n jeweils einen der logische Werte "0" oder "1" zuzuordnen. Dem Wert x ist dann der logische Wert des Wertes m und dem Wert y der logische Wert des Wertes n zuzuordnen. In gleicher Weise lassen sich dann durch Frequenzumtastung auch Daten von der ersten Sende-Empfangs-Station 1 zur zweiten Sende-Empfangs-Station 2 übertragen.

Aufgrund der Frequenzumtastung entstehen an den Ausgängen der Mischer 14, 24 jeweils zwei sich voneinander unterscheidende Zwischenfrequenzen f = fc/na2, fi* = fc/na2*, wobei fc für die Trägerfrequenz der Sendesignale S1, S2 steht, so daß die ZF-Filter 15, 25 jeweils zwei Durchlaßbereiche aufweisen müssen.

Dieser Nachteil wird vermieden, wenn die Frequenzstufe $\Delta f$ derart gewählt wird, daß die Frequenzumtastung eine Vorzeichenumkehr der. Differenz zwischen den Impulswiederholfrequenzen fp1, fp2 bewirkt. Die Frequenzwerte f21, f22 sind dann so zu wählen, daß die Impulswiederholfrequenz fp1 in der Mitte zwischen diesen Werten liegt.

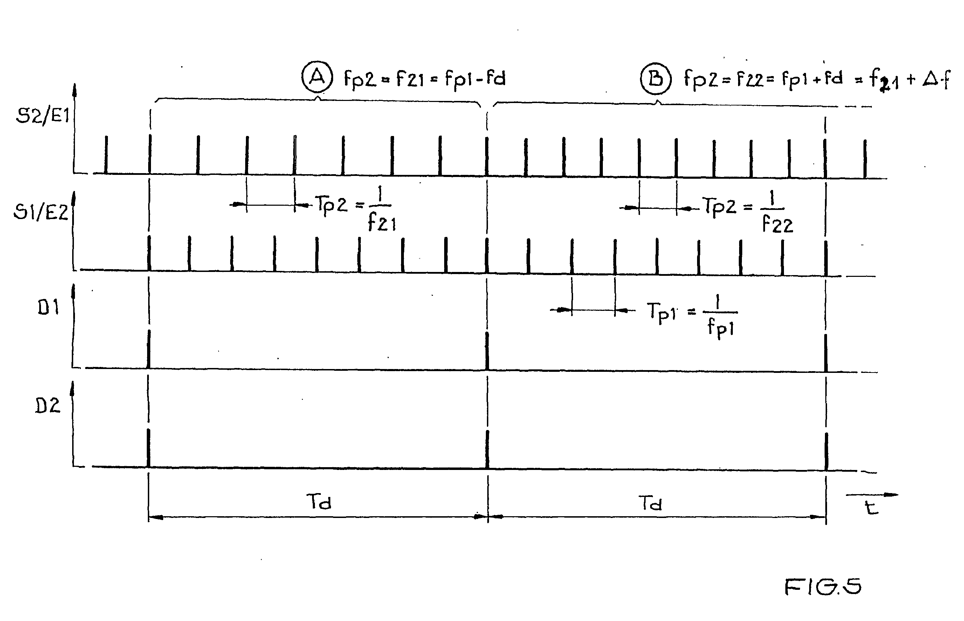

Figur 5 zeigt für eine derartige Frequenzumtastung die Sendesignale S1, S2, die Empfangssignale E1, E2 und die Auswertesignale D1, D2, für den Fall, daß die Impulswiederholfrequenz fp2 = fp21 = fp1 - fd umgetastet wird auf einen Wert fp22 = fp21 + $\Delta f$ = fp1 + fd, also mit $\Delta f = 2 \cdot fd$. Dargestellt ist dabei der Fall für eine Signallaufzeit $\tau = 0$. In diesem Fall bewirkt die Frequenzstufe $\Delta f$ keine Änderung des Pulsabstands Td zwischen den Impulsen der Auswertesignale D1, D2.

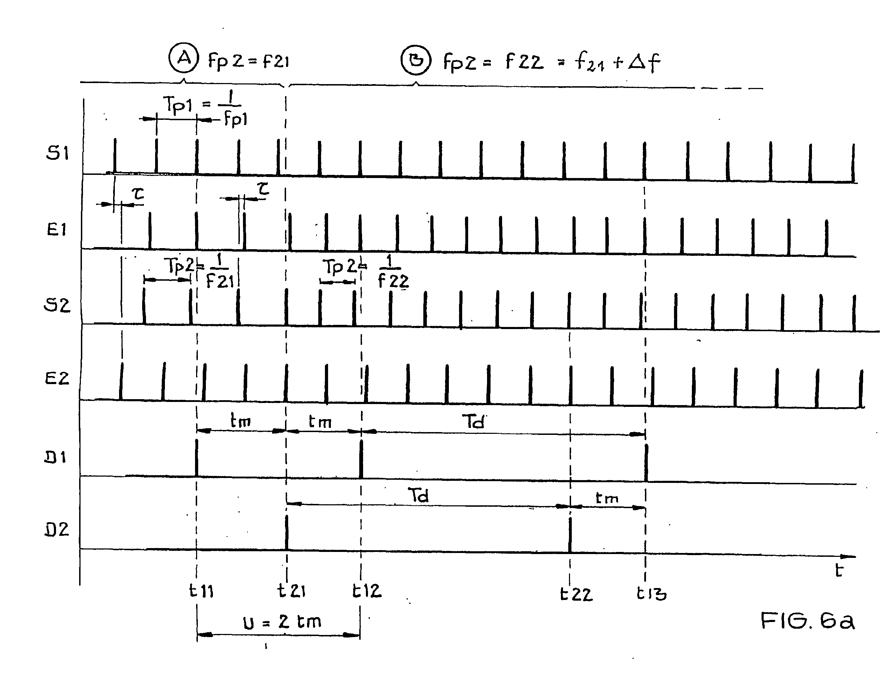

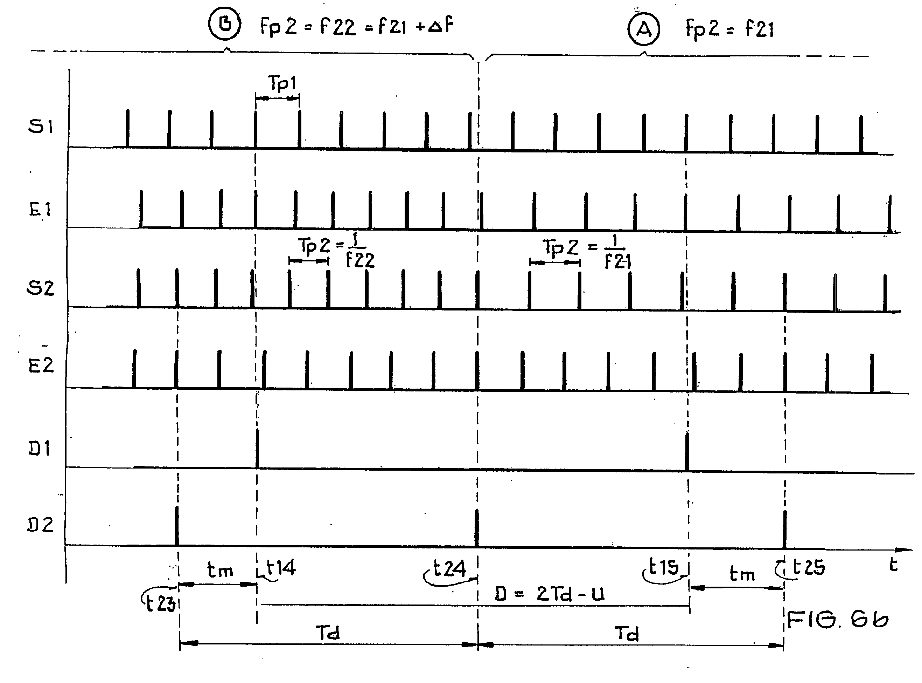

Figuren 6a und 6b zeigen die gleichen Signale für eine Signallaufzeit $\tau > 0$. Im Zeitbereich A ist die Impulswiederholfrequenz fp2 des zweiten Sendesignals S2 gleich dem ersten Frequenzwert f21 und im Zeitbereich B gleich dem zweiten Frequenzwert f22 = f21 + $\Delta f$. Der Frequenzwechsel vom Frequenzwert f21 zum Frequenzwert f22 erfolgt zum Zeitpunkt t21 und der Frequenzwechsel vom Frequenzwert f22 zurück zum Frequenzwert f21 zum Zeitpunkt t24, also synchron zu den Impulsen des zweiten Auswertesignals D2.

Der Frequenzwechsel bewirkt keine Änderung des Betrag des Koinzidenzabstands tm, es ändert sich lediglich die Richtung des Versatzes zischen den Auswertesignalen D1, D2, d. h. das Vorzeichen des Phasenunterschieds zwischen diesen Signalen. Der Pulsabstand zwischen den Impulsen des ersten Auswertesignals D1 wird daher beim Wechsel vom ersten Frequenzwert f21 zum zweiten Frequenzwert f22 einmalig vom Wert Td auf den Wert U = 2 tm = 4 $\tau$ na reduziert und beim Wechsel zurück zum ersten Frequenzwert f21 einmalig auf den Wert D = 2 Td - U erhöht. Die aus der Frequenzumtastung resultierende Änderung des Pulsabstands zwischen den Impulsen des ersten Auswertesignal D1 ist somit abhängig von der Signallaufzeit $\tau$. Durch Messung der Pulsabstände zwischen den Impulsen des ersten Auswertesignals D1 ist es daher möglich, die Werte U oder D zu ermitteln und hieraus die Signallaufzeit $\tau$ und den Abstand zwischen den Sende-Empfangs-Stationen 1, 2 zu bestimmen.

Diese Art der Frequenzumtastung eignet sich besonders gut zur seriellen Übertragung von digitalen Daten.

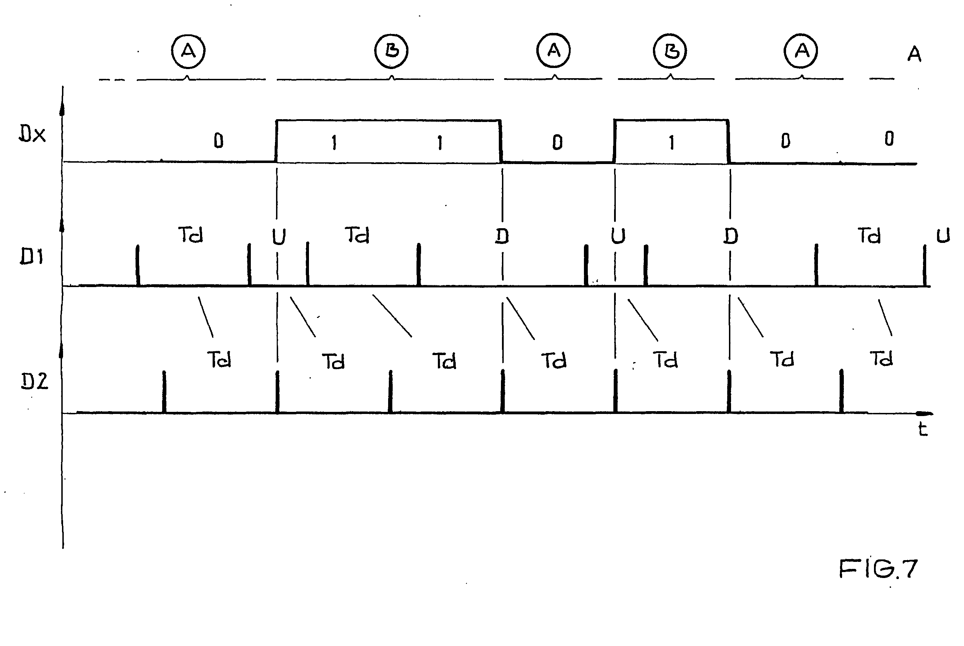

Den Frequenzwerten f21, f22 ist hierzu wie in Figur 7 dargestellt lediglich jeweils einer der logischen Werte "0" oder "1" zuzuordnen.

Gemäß Figur 7 wird ein digitales Datensignal Dx von der zweiten Sende-Empfangs-Station 2 zur ersten Sende-Empfangs-Station 1 übertragen, indem die Impulswiederholfrequenz fp2 des zweiten Sendesignals S2 in Zeitbereichen A, in denen ein logischer Wert "0" übertragen werden soll, auf den ersten Frequenzwert f21 und in Zeitbereichen B, in denen eine logische "1" übertragen werden soll, auf den zweiten Frequenzwert f22 gesetzt wird. In der ersten Sende-Empfangs-Station 1 erkennt man dann anhand des Pulsabstands zwischen den Impulsen des ersten Auswertesignals D1, ob ein Bitwertwechsel im Datensignal Dx stattgefunden hat. Verkürzt sich der Pulsabstand auf einen unterhalb der Periode Td liegenden Wert U ist dies ein Hinweis auf einen Bitwertwechsel von "0" auf "1 ", verlängert sich der Pulsabstand hingegen auf einen oberhalb der Periode Td liegenden Wert D ist dies ein Hinweis auf einen Bitwertwechsel von "1" auf "0". In gleicher Weise kann auch das erste Sendesignal S1 durch Frequenzumtastung moduliert werden, womit eine bidirektionale Datenübertragung zwischen den Sende-Empfangs-Station 1, 2 gewährleistet wird.

Die beschriebenen Verfahren liefern aufgrund der Periodizität der Sendesignale S1, S2 lediglich für Signallaufzeiten τ, die innerhalb eines durch die Impulswiederholfrequenzen fp1, fp2 bestimmten Eindeutigkeitsbereichs liegen, eindeutige Meßergebnisse. Der Eindeutigkeitsbereich läßt sich zwar durch Ändern der Impulswiederholfrequenzen fp1, fp2, beispielsweise durch Frequenzteilung erhöhen, dies ist aber mit einer Reduzierung der Meßauflösung verbunden.

Das Überschreiten des Eindeutigkeitsbereichs während einer Messung kann durch eine zusätzliche Messung erkannt werden, indem der Eindeutigkeitsbereich für die zusätzliche Messung durch Änderung der Impulswiederholfrequenzen fp1, fp2 erhöht wird und indem geprüft wird, ob das Ergebnis der zusätzlichen Messung innerhalb des Eindeutigkeitsbereichs der einen Messung liegt.

## Patentansprüche

1. Verfahren zur Ermittlung des Abstands zwischen einer ersten und zweiten Sende-Empfangs-Station (1, 2), **dadurch gekennzeichnet,**

   - **daß** in der ersten und zweiten Sende-Empfangs-Station (1, 2) ein erstes bzw. zweites Sendesignal (S1, S2) erzeugt wird und als Mikrowellenimpulsreihe mit vorgegebener Impulswiederholfrequenz (fp1, fp2) zur jeweils anderen Sende-Empfangs-Station (2, 1) aussendet und von dieser als Empfangssignal (E2, E1) empfangen wird, wobei die Impulswiederholfrequenzen (fp1, fp2) der Sendesignale (S1, S2) sich um einen vorgegebenen Differenzfrequenzwert (fd) voneinander unterscheiden,
   - **daß** in der ersten und zweiten Sende-Empfangs-Station (1, 2) erste bzw. zweite Koinzidenzzeitpunkte (t11, t12, ...; t21, t22, ...) ermittelt werden, die den Zeitpunkten entsprechen, zu denen Impulse des von der jeweiligen Sende-Empfangs-Station (1, 2) ausgesendeten Sendesignals (S1, S2) und empfangenen Empfangssignals (E1, E2) zusammentreffen,
   - und **daß** der Abstand zwischen den Sende-Empfangs-Stationen (1, 2) aus den Abständen (tm; x, y; U, D) zwischen den Koinzidenzzeitpunkten ermittelt wird.

2. Verfahren nach Anspruch 1, **dadurch gekennzeichnet, daß** ein dem zeitlichen Versatz zwischen den ersten und zweiten Koinzidenzzeitpunkten entsprechender Koinzidenzabstand (tm) als Maß des Abstands zwischen den beiden Sende-Empfangs-Stationen (1, 2) ermittelt wird.

3. Verfahren nach Anspruch 2, **dadurch gekennzeichnet, daß** Informationen über die zweiten Koinzidenzzeitpunkte (t21, t22) über einen Funkkanal von der zweiten Sende-Empfangs-Station (2) zur ersten Sende-Empfangs-Station (1) übertragen werden und daß der Koinzidenzabstand (tm) in der ersten Sende-Empfangs-Station (1) aus den übermittelten Informationen und den in der ersten Sende-Empfangs-Station (1) ermittelten ersten Koinzidenzzeitpunkten (t11, t12) ermittelt wird.

4. Verfahren nach Anspruch 3, **dadurch gekennzeichnet, daß** das die Übertragung der Informationen über die zweiten Koinzidenzzeitpunkte (t21, t22) und die Übertragung der Sendesignale (S1, S2) über unterschiedliche Funkkanäle erfolgt.

5. Verfahren nach Anspruch 1, **dadurch gekennzeichnet, daß** das zweite Sendesignal (S2) durch Frequenzumtastung seiner Impulswiederholfrequenz (fp2) moduliert wird und daß eine aus der Frequenzumtastung resultierende Änderung (td) des Abstands (Td) zwischen den ersten Koinzidenzzeitpunkten (t11, t12, ...) als Maß des Abstands zwischen den Sende-Empfangs-Stationen (1, 2) ermittelt wird.

6. Verfahren nach Anspruch 5, **dadurch gekennzeichnet, daß** die Impulswiederholfrequenz (fp2) des zweiten Sendesignals (S2) bei der Frequenzumtastung zwischen zwei festen Frequenzwerten (f21, f22) umgeschaltet wird, wobei die Umschaltung synchron zu den zweiten Koinzidenzzeitpunkten (t21, t22, ...) erfolgt.

7. Verfahren nach Anspruch 6, **dadurch gekennzeichnet, daß** die beiden festen Frequenzwerte (f21, f22) derart vorgegeben werden, daß der Wechsel vom einen Frequenzwert (f21) zum anderen Frequenzwert (f22) eine Verdoppelung des Betrags der Differenz zwischen den Impulswiederholfrequenzen (fp1, fp2) der Sendesignale (S1, S2) bewirkt.

8. Verfahren nach Anspruch 6, **dadurch gekennzeichnet, daß** beiden festen Frequenzwerte (f21, f22) derart vorgegeben werden, daß der Wechsel vom einen Frequenzwert (f21) zum anderen Frequenzwert (f22) eine Vorzeichenumkehr der Differenz zwischen den Impulswiederholfrequenzen (fp1, fp2) der Sendesignale (S1, S2) bewirkt.

9. Verfahren nach einem der vorherigen Ansprüche, **dadurch gekennzeichnet, daß** der Differenzfrequenzwert (fd) wesentlich kleiner als Impulswiederholfrequenzen (fp1, fp2) ist.

10. Verfahren nach einem der vorherigen Ansprüche, **dadurch gekennzeichnet, daß** beide Sendesignale (S1, S2) zur Übertragung von Daten moduliert werden.

11. Verfahren nach einem der vorherigen Ansprüche, **dadurch gekennzeichnet, daß** in den Sende-Empfangs-Stationen (1, 2) das in der jeweiligen Sende-Empfangs-Station (1, 2) erzeugte Sendesignal (S1, S2) mit dem von dieser Station empfangenden Empfangssignals (E1, E2) durch Mischung in ein Zwischenfrequenzsignal (Z1, Z2) umgesetzt wird, das Zwischenfrequenzsignal (Z1, Z2) durch Filterung und Hüllkurvenmodulation in ein impulsförmiges Auswertesignal (D1, D2) umgesetzt wird und die zeitliche Position der Impulse des Auswertesignals (D1, D2) als Koinzidenzzeitpunkte (t11, t12, t21, t22) ermittelt werden.

12. Verwendung des Verfahrens nach einem der vorherigen Ansprüche in einem schlüssellosen Schließsystem für Kraftfahrzeuge zur Ermittlung des Abstands zwischen einer im Kraftfahrzeug vorgesehenen ersten Sende-Empfangs-Station und einer in einem Schlüsselmodul vorgesehenen zweiten Sende-Empfangs-Station.

**Claims**

1. A procedure for calculating the distance between a first and a second transmission-receiving station (1, 2), **characterised in that**

    - in the first and second transmission-receiving station (1, 2), a first or second transmission signal (S1, S2) is generated, and is transmitted as a microwave pulse sequence with a prespecified pulse repetition frequency (fp1, fp2) to the other transmission-receiving station (2, 1) concerned, and is received from said station as a receiving signal (E2, E1), whereby the pulse repetition frequencies (fp1, fp2) of the transmission signals (S2, S2) differ from each other by a prespecified differential frequency value (fd)
    - in the first and second transmission-receiving station (1, 2), first or second coincidental time points (t11, t12, etc. ; t21, t22 etc.) are determined, which correspond to the time points at which pulses of the transmission signal (S1, S2) from the transmission-receiving station (1, 2) in question are transmitted coincide with the receiving signals (E1, E2) received
    - that the distance between the transmission-receiving station (1, 2) is determined from the distances (tm; x; y; U, D) between the coincidental time points

2. A procedure according to claim 1, **characterised in that** a coincidental distance (tm) which corresponds to the time offset between the first and second coincidental time points is determined as the length of the distance between the two transmission-receiving stations (1, 2).

3. A procedure according to claim 2, **characterised in that** information regarding the second coincidental time points (t21, t22) is transferred via a radio channel from the second transmission-receiving station (2) to the first transmission-receiving station (1), and that the coincidental distance (tm) in the first transmission-receiving station (1) is determined from the information provided and the first coincidental time points (t11, t12) determined in the first transmission-receiving station (1).

4.  A procedure according to claim 3, **characterised in that** the information regarding the second coincidental time points (t21, t22) and the transmission signals (S1, S2) are sent via different radio channels.

5.  A procedure according to claim 1, **characterised in that** the second transmission signal (S2) is modulated by the phase shift keying of its pulse repetition frequency (fp2), and that a change (td) which results from the phase shift keying of the distance (Td) between the first coincidental time points (t11, t12 etc.) is determined as the length of the distance between the transmission-receiving stations (1, 2).

6.  A procedure according to claim 5, **characterised in that** the pulse repetition frequency (fp2) of the second transmission signal (S2) is switched over during the phase shift keying between two fixed frequency values (f21, f22), whereby the switchover is conducted in synchronicity with the second coincidental time points (t21, t22 etc.).

7.  A procedure according to claim 6, **characterised in that** the two fixed frequency values (F21, f22) are prespecified in such a manner that the switch from one frequency value (f21) to the other frequency value (f22) results in a doubling of the sum of the difference between the pulse repetition frequencies (fp1, fp2) of the transmission signals (S1, S2).

8.  A procedure according to claim 6, **characterised in that** the two fixed frequency values (F21, f22) are prespecified in such a manner that the switch from one frequency value (f21) to the other frequency value (f22) results in a reversal of the preceding mathematical sign of the difference between the pulse repetition frequencies (fp1, fp2) of the transmission signals (S1, S2).

9.  A procedure according to any one of the above claims, **characterised in that** the differential frequency value (fd) is significantly smaller than pulse repetition frequencies (fp1, fp2).

10. A procedure according to any one of the above claims, **characterised in that** the two transmission signals (S1, S2) are modulated in order to send data.

11. A procedure according to any one of the above claims, **characterised in that** in the transmission-receiving stations (1, 2), the transmission signal (S1, S2) generated in the transmission-receiving station (1, 2) concerned is converted by merging, together with the receiving signal (E1, E2) received by this station, into an interim frequency signal (Z1, Z2), that the interim frequency signal (Z1, Z2) is converted, by filtering and modulating the envelope curve, into a pulse-formed evaluation signal (D1, D2), and that the time position of the pulses from the evaluation signal (D1, D2) are determined as coincidental time points (t11, t12, t21, t22).

12. The use of the procedure according to any one of the above claims in a keyless locking system for vehicles, in order to determine the distance between a first transmission-receiving station provided in the vehicle and a second transmission-receiving station provided in a key module.

**Revendications**

1.  Procédé de détermination de l'intervalle entre une première et une deuxième station d'émission-réception (1, 2), **caractérisé en ce que**

    - dans la première et la deuxième stations d'émission-réception (1, 2), un premier ou un deuxième signal d'émission (S1, S2) est produit et, en tant que série d'impulsions hyperfréquences avec une fréquence de répétition d'impulsions (fp1, fp2) prédéfinie, envoyé à l'autre station d'émission-réception (2, 1) respective, et est reçu par celle-ci en tant que signal de réception (E2, E1), les fréquences de répétition d'impulsions (fp1, fp2) des signaux d'émission (S1, S2) se distinguant les unes des autres selon une valeur de fréquence différentielle (fd) prédéfinie,
    - **en ce que**, dans la première et la deuxième stations d'émission-réception (1, 2), des premiers ou deuxièmes moments de coïncidence (t11, t12, ... ; t21, t22, ...) sont déterminés, qui correspondent aux moments où des impulsions du signal d'émission (S1, S2) émis par la station d'émission-réception (1, 2) respective et du signal de réception (E1, E2) reçu coïncident,
    - **en ce que** l'intervalle entre les stations d'émission-réception (1, 2) est déterminé à partir des intervalles (tm ; x, y ; U, D) entre les moments de coïncidence.

**2.** Procédé selon la revendication 1, **caractérisé en ce qu'**un intervalle de coïncidence (tm) correspondant au décalage temporel entre les premiers et deuxièmes moments de coïncidence est déterminé en tant que mesure de l'intervalle entre les deux stations d'émission-réception (1, 2).

**3.** Procédé selon la revendication 2, **caractérisé en ce que** des informations sur les deuxièmes moments de coïncidence (t21, t22) sont transmises, via une liaison radioélectrique, de la deuxième station d'émission-réception (2) vers la première station d'émission-réception (1), et **en ce que** l'intervalle de coïncidence (tm) dans la première station d'émission-réception (1) est déterminé à partir des informations transmises et des premiers moments de coïncidence (t11, t12) déterminés dans la première station d'émission-réception (1).

**4.** Procédé selon la revendication 3, **caractérisé en ce que** la transmission des informations sur les deuxièmes moments de coïncidence (t21, t22) et la transmission des signaux d'émission (S1, S2) s'effectuent via des liaisons radioélectriques différentes.

**5.** Procédé selon la revendication 1, **caractérisé en ce que** le deuxième signal d'émission (S2) est modulé par modulation par déplacement de fréquence de sa fréquence de répétition d'impulsions (fp2), et **en ce qu'**une variation (td), résultant de la modulation par déplacement de fréquence, de l'intervalle (Td) entre les premiers moments de coïncidence (t11, t12, ...) est déterminée en tant que mesure de l'intervalle entre les stations d'émission-réception (1, 2).

**6.** Procédé selon la revendication 5, **caractérisé en ce que** la fréquence de répétition d'impulsions (fp2) du deuxième signal d'émission (S2) est commutée lors de la modulation par déplacement de fréquence entre deux valeurs de fréquence (f21, f22), la commutation s'effectuant de façon synchrone avec les deuxièmes moments de coïncidence (t21, t22,...).

**7.** Procédé selon la revendication 6, **caractérisé en ce que** les deux valeurs de fréquence (f21, f22) fixes sont prédéfinies de sorte que le changement depuis une valeur de fréquence (f21) vers l'autre valeur de fréquence (f22) provoque un doublement de la valeur de la différence entre les fréquences de répétition d'impulsions (fp1, fp2) des signaux d'émission (S1, S2).

**8.** Procédé selon la revendication 6, **caractérisé en ce que** les deux valeurs de fréquence (f21, f22) fixes sont prédéfinies de sorte que le changement depuis une valeur de fréquence (f21) vers l'autre valeur de fréquence (f22) provoque une inversion de la différence entre les fréquences de répétition d'impulsions (fp1, fp2) des signaux d'émission (S1, S2).

**9.** Procédé selon une des revendications précédentes; **caractérisé en ce que** la valeur de fréquence différentielle (fd) est beaucoup plus faible que les fréquences de répétition d'impulsions (fp1, fp2).

**10.** Procédé selon une des revendications précédentes, **caractérisé en ce que** les deux signaux d'émission (S1, S2) sont modulés pour la transmission de données.

**11.** Procédé selon une des revendications précédentes, **caractérisé en ce que**, dans les stations d'émission-réception (1, 2), le signal d'émission (S1, S2) produit dans la station d'émission-réception (1, 2) respective est converti avec le signal de réception (E1, E2) reçu par cette station, par mélange, en un signal de fréquence intermédiaire (Z1, Z2), **en ce que** le signal de fréquence intermédiaire (Z1, Z2) est converti, par filtrage et démodulation de courbes enveloppantes, en un signal d'analyse (D1, D2) en forme d'impulsions, et **en ce que** la position temporelle des impulsions du signal d'analyse (D1, D2) est déterminée en tant que moments de coïncidence (t11, t12, t21, t22).

**12.** Utilisation du procédé selon une des revendications précédentes dans un système de fermeture sans clé pour véhicules automobiles en vue de la détermination de l'intervalle entre une première station d'émission-réception prévue dans le véhicule automobile et une deuxième station d'émission-réception prévue dans un module de clé.

FIG.1

EP 1 556 259 B1

12

FIG. 2

FIG.3

FIG.4

FIG.5

FIG. 6a

FIG.6b

FIG.7

EP 1 556 259 B1